# EUROPÄISCHE PATENTSCHRIFT

(11) **EP 0 921 020 B1**
(45) Veröffentlichungstag und Bekanntmachung des Hinweises auf die Patenterteilung: **21.06.2006**
(21) Anmeldenummer: 98122227.6
(22) Anmeldetag: 23.11.1998
(51) Int. Cl.: B60C 11/03, B60C 11/11, B60C 11/12

(54) **Laufflächenprofil eines Winterreifens**
Winter tyre tread
Profil de bande de roulement d'un pneu d'hiver

(30) Priorität: 04.12.1997 DE 19753819
(43) Veröffentlichungstag der Anmeldung: 09.06.1999
(60) Teilanmeldung: 05001621.1
(73) Patentinhaber: Continental Aktiengesellschaft, 30165 Hannover (DE)
(72) Erfinder: Diensthuber, Franz, 30559 Hannover (DE); Peschel, Wolfgang, 30823 Garbsen (DE)

(56) Entgegenhaltungen:
- DE-A- 1 505 097
- DE-A- 4 427 895
- DE-A- 19 705 156
- FR-A- 791 250
- FR-A- 2 457 185
- US-A- 4 785 863
- US-A- 4 934 424
- US-A- 5 660 651

## Beschreibung

Die Erfindung betrifft ein Laufflächenprofil eines Winterreifens. An Winterreifen werden unterschiedliche einander widersprechende Anforderungen gestellt. So soll ein Winterreifen sowohl guten Griff auf Schnee und Eis als auch wie bei Sommerreifen gute Handlingeigenschaften gewährleisten. Diese Zielvorgaben erfordern sich widersprechende Maßnahmen in der Konstruktion des Winterreifens, so daß entweder ein Winterreifen mit guten Wintereigenschaften mit gutem Griff auf Eis und Schnee und vergleichsweise schlechtem Handling auf trockener Straße oder aber ein Sommerreifen mit gutem Handling auf trockener Straße, aber mit vergleichsweise schlechten Wintereigenschaften entsteht.

Ein Winterreifen mit den Merkmalen des Oberbegriffs des Patentanspruchs 1 ist aus der US 5,660,651 B bekannt. Bei diesem Winterreifen ist durch die steifere Ausbildung der Profilblockelemente auf der zur Fahrzeugaußenseite weisenden Seite des Laufflächenprofils die für das Handling gewünschte Steifigkeit genau in dem für das Handling wichtigen Reifenseite (Handlingseite) und somit gutes Handling auf trockener Straße gewährleistet. In dem für das Handling weniger wichtigen axialen Laufflächenbereich (Winterseite) ist die für guten Griff auf Schnee und Eis wichtige geringe Steifigkeit der Profilblöcke und somit guter Wintergriff gewährleistet.

Der Erfindung liegt die Aufgabe zugrunde ein Laufflächenprofil eines Winterreifens zu schaffen, das sowohl gute Wintereigenschaften mit gutem Griff auf Eis und Schnee als auch gutem Handling auf trockener Straße ermöglicht.

Die Aufgabe wird erfindungsgemäß durch Ausbildung des Laufflächenprofils gemäß den Merkmalen des kennzeichnenden Teils des Anspruchs 1 gelöst.

Die Ausbildung eines Winterreifens gemäß den Merkmalen von Anspruch 1 ermöglicht eine größere Versteifung der Profilblockelemente in den Schultern gegenüber dem Mittenbereich des Profils. Die Versteifung in den Schultern verbessert zusätzlich die Handlingeigenschaften bei guten Wintergriffeigenschaften, die durch die weichere Gestaltung des Mittenbereichs weiter gewährleistet werden. Die steifere Gestaltung in der zur Fahrzeuginnenseite weisenden Schulter ermöglicht zusätzlichen Einbau weiterer Lamellen in diese Profilelemente, wodurch der Wintergriff an sich schon durch zusätzliche Kanten weiter verbessert wird und darüberhinaus auf dieser Seite die Schulterblockreihe wiederum in seiner Steifigkeit reduziert und der Wintergriff weiter verbessert wird.

Durch die Ausbildung gemäß den Merkmalen des Anspruchs 2 wird gerade auf der Winterseite eine besonders hohe Zahl von Traktionskanten geschaffen, wobei die Vielzahl der Lamellen, die für den Strukturfaktor verantwortlich sind, die Profilblöcke in dieser Winterseite noch weicher machen. Die Handlingseite ist durch die geringere Zahl der die Traktionskanten erzeugenden Lamellen steifer. Der Strukturfaktor in Umfangsrichtung ist die Summe der in Umfangsrichtung projezierten Profilblockkanten und Lamellen. Der Strukturfaktor quer zur Umfangsrichtung ist die Summe der quer zur Umfangsrichtung projezierten Profilblockkanten und Lamellen.

Die freie Durchsicht einer Umfangsnut ist ein Maß für den Eisgriff- und Schneegriff. Durch die Ausbildung gemäß den Merkmalen des Anspruchs 3 wird der Reifen im Eisgriff- und im Bremsverhalten auf Schnee weiter verbessert ohne die Handlingeigenschaften auf trockener Straße zu gefährden.

Durch die Merkmale des Anspruchs 5 werden die Profilblockelemente außen mit einer harten, abriebreduzierenden Schale und innen mit einem weichen, die Wintereigenschaften verbessernden Kern ausgebildet.

Die Ausbildung gemäß den Merkmalen des Anspruchs 9 ermöglicht eine besonders hohe wirkende Kantenlänge in den Profilblockelementen. Die Ausbildung gemäß den Merkmalen von Anspruch 7 ermöglicht eine besonders hohe wirkende Kantenlänge in den Profilblockelementen der Winterseite und weniger große wirkende Kantenlänge und somit höhere Steifigkeit in den Profilblockelementen der Handlingseite.

Die Ausbildung gemäß den Merkmalen von Anspruch 8 ermöglicht ein sicheres Abfließen von Wasser durch die Profilrillen und sichert somit gute Aquaplaningeigenschaften.

Die Erfindung wird auch durch das Laufflächenprofil gemäß den Merkmalen des Anspruchs 10 gelöst. Die höhere Verschränkung in den Schultern bewirkt, daß diese steifer als der Mittenbereich des Profils ausgebildet sind. Die Versteifung in den Schultern verbessert die Handlingeigenschaften bei guten Wintergriffeigenschaften, die durch die weichere Gestaltung des Mittenbereichs gewährleistet werden. Die steifere Gestaltung in der zur Fahrzeuginnenseite weisenden Schulter ermöglicht zusätzlichen Einbau weiterer Lamellen in diese Profilelemente, wodurch der Wintergriff an sich schon durch zusätzliche Kanten weiter verbessert wird und darüberhinaus auf dieser Seite die Schulterblockreihe wiederum in seiner Steifigkeit reduziert und der Wintergriff weiter verbessert wird.

Die Erfindung wird im folgenden anhand der in den Figuren 1 bis 5 dargestellten Ausführungsbeispiele näher erläutert. Hierin zeigen
- Fig. 1: Ausschnitt eines Laufflächenprofils in Draufsicht,
- Fig. 2: Darstellung der Lamelle gemäß Schnitt II-II von Fig.1 zur Erläuterung des Tiefenverlaufs,
- Fig. 3: Darstellung benachbarter Lamellen zur Erläuterung der Verschränkung,
- Fig. 4: Darstellung zur Erläuterung des Querrillenversatzes,
- Fig. 5: Darstellung zur Erläuterung der wirkenden Lamellenlänge eines Profilklotzes.

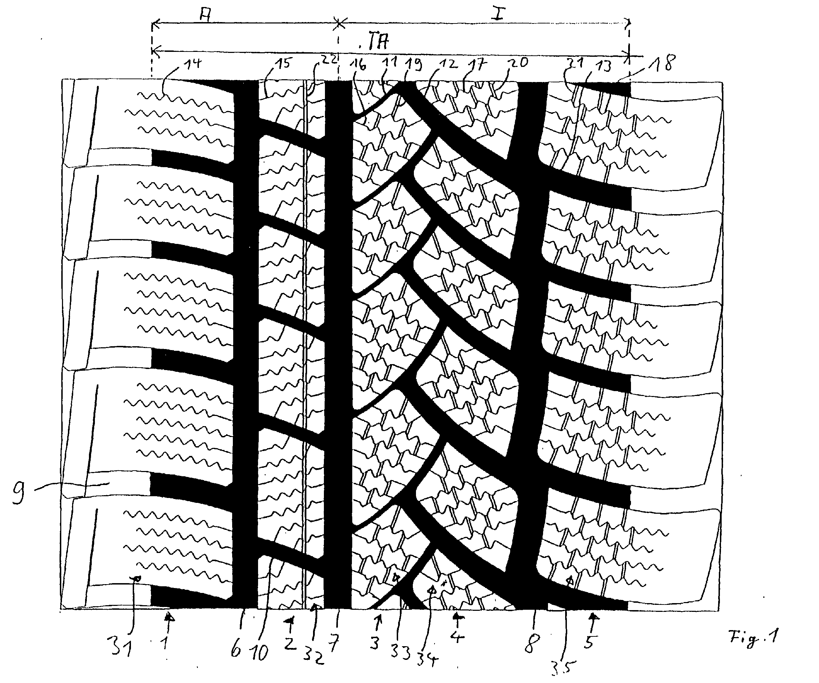

Fig. 1 zeigt einen Umfangsabschnitt eines Laufflächenprofils eines schlauchlosen Winterreifens mit fünf in axialer Richtung nebeneinander angeordneten Profilblockreihen 1,2,3,4 und 5. Die beiden außenliegenden Profilblockreihen 1,5 sind Schulterblockreihen. Die benachbarten Profilblockreihen 1 und 2 bzw 2 und 3 bzw 4 und 5 sind jeweils durch eine Umfangsrille 6 bzw 7 bzw 8 axial voneinander getrennt. Die in Umfangsrichtung hintereinander angeordneten Profilblockelemente 31 der Schulterblockreihe1 sind jeweils durch Querrillen 9 voneinander beabstandet. Die in Umfangsrichtung hintereinander angeordneten Profilblockelemente 35 der Schulterblockreihe 5 sind jeweils durch Querrillen 13 voneinander beabstandet. Die in Umfangsrichtung hintereinander angeordneten Profilblockelemente 32 der Profilblockreihe 2 sind jeweils durch Querrillen 10 voneinander beabstandet. Die in Umfangsrichtung hintereinander angeordneten Profifblockelemente 33 der Profilblockreihe 3 sind jeweils durch Querrillen 11 voneinander beabstandet. Die in Umfangsrichtung hintereinander angeordneten Profilblockelemente 34 der Profilblockreihe 4 sind jeweils durch Querrillen 12 voneinander beabstandet. Die Querrillen 11 und 12 trennen auch die Profilblockreihen 3 und 4 in axialer Richtung.

Die Profilblockelemente 31, 32 , 33, 34 und 35 der Profilblockreihen 1,2,3,4 und 5 sind jeweils mit sinusförmig ausgebildeten Lamellen (Feineinschnitten) 14, 15, 16, 17 und 18 ausgebildet.

In Fig.1 ist die Breite der Bodenaufstandsfläche TA , die sich von Schulterprofilblockreihe zu Schulterprofilblockreihe erstreckt, eingezeichnet. Das Profil ist axial in zwei funktional unterschiedliche Bereiche A und I aufgeteilt. Der Bereich A, der sich von der im Betriebszustand eines Fahrzeugrades am Pkw zur Fahrzeugaußenseite weisenden Schulter bis zur Umfangsrille 7 erstreckt, ist konstruktiv speziell für gute Handlingeigenschaften ausgebildet und erstreckt sich axial über 25 und 75 % der Bodenaufstandsfläche, in Fig. 1 über 40 % der Bodenaufstandstandsfläche. Der Bereich I, der sich von der im Betriebszustand eines Fahrzeugrades am Pkw zur Fahrzeuginnenseite weisenden Schulter bis zur Umfangsrille 7 erstreckt, ist konstruktiv speziell für gute Wintergriffeigenschaften ausgebildet.

Die beiden Umfangsrillen 6 und 7 sind sind geradlinig in Umfangsrichtung verlaufend mit gleichbleibender Breite ausgebildet. Sie gewährt guten Wasserablauf. Der freie Nutquerschnitt in Umfangsrichtung entspricht der Breite der Umfangsrille. Die Umfangsrille 8 ist in Umfangsrichtung verlaufend ausgebildet, wobei der Abstand zwischen den benachbarten Profilblockelementen 34 und 35 und somit die Breite im wesentlichen gleich bleibt und der Breite der Umfangsrillen 6 und 7 entspricht. Die Profilblockelemente 34 und 35 reichen mit ihren schräg zur Umfangsrichtung verlaufenden, die Umfangsrille 8 begrenzenden Seiten soweit in die Umfangsrille 98 hinein, daß der freie Nutquerschnitt in Umfangsrichtung (Projektion in Umfangsrichtung) deutlich kleiner als der freie Nutquerschnitt der Umfangsrillen 6 und 7 ist. Der freie Nutquerschnitt ist ein Maß für die in einer Nut vorhandenen Kanten und somit für den Eis- und Schneegriff im Bereich dieser Nut. Je niederer der freie Nutquerschnitt ist desto besser ist der Eis- und Schneegriff. Die Profilblockelemente 33 und 34 der Profilblockreihen 3 und 4 sind so ausgebildet, daß sie in axial in die jeweils benachbarte Profilblockreihe hinein erstrecken. Zwischen diesen Profilblockreihen gibt es keinen freien Nutquerschnitt in Umfangsrichtung. Der freie Nutquerschnitt in Umfangsrichtung ist somit im Bereich I kleiner als im Bereich A.

Die Pitchzahl der Profilblockreihen im Bereich I ist höher als die Pitchzahl im Bereich A. Beispielsweise ist die Pitchzahl im Bereich I 63 und im Bereich A 59. Auf diese Weise sind im Bereich I über den Umfang verteilt mehr und kürzere Profilblockelemente ausgebildet als im Bereich A. Im Bereich I sind somit mehr Kanten ausgebildet als im Bereich A. Die Profilblöcke des Bereichs A sind größer und steifer ausgebildet als die des Bereichs I.
Die Querrille 10 und die Querrille 9 sind schräg verlaufend mit einem Steigungswinkel > 0° zur Axialrichtung und ausgehend von derMündung der Querrille 10 in die Umfangsrille 7 nach axial außen mit kontinuierlich abnehmender Steigung, d. h. mit abnehmendem Steigungswinkel zur Axialrichtung, ausgebildet. Im Bereich der Umfangsrille 6 sind die beiden Querrillen 10 und 9 zueinander in Umfangsrichtung soweit versetzt, daß sie in ihrer Verlängerung entsprechend dem Steigungsverlauf der Querrille 10 bzw 9 an einer Seitenwand eines Profilblockelementes 31 bzw 32 der jeweils anderen Profilblockreihe 1 bzw 2 stumpf enden.

Die Querrille 11 ist schräg verlaufend mit einem Steigungswinkel > 0° zur Axialrichtung und ausgehend von der Umfangsrille 7 nach axial außen mit kontinuierlich zunehmender Steigung, d. h mit zunehmendem Steigungswinkel zur Axialrichtung, ausgebildet.

Die Querrille 12 und die Querrille 13 sind schräg verlaufend mit einem Steigungswinkel < 0° zur Axialrichtung und ausgehend von der stumpfen Mündung der Querrille 12 in die Querrille 11 nach axial außen mit kontinuierlich abehmender negativer Steigung, d. h mit abnehmendem negativem Steigungswinkel zur Axialrichtung, ausgebildet. Im Bereich der Umfangsrille 8 sind die beiden Querrillen 12 und 13 zueinander in Umfangsrichtung soweit versetzt, daß sie in gleicher Umfangsposition in die Umfangsrille 8 münden. Hierdurch wird - wie in Fig.4b dargestellt ist - der Wasserableitwiderstand gegenüber einer unversetzten Ausführung gemäß Fig.4a reduziert.

Die Profilblockelemente 31 bzw 35 der Schulterblockreihen 1 und 5 sind jeweils mit mehreren parallel zueinander und zu den jeweiligen Querrillen 9 bzw 13 ausgebildeten Lamellen 14 bzw 18 ausgebildet. Die Lamellen 14 bzw 18 erstrecken sich jeweils ausgehend von der benachbarten Umfangsrille 6 bzw 8 bis außerhalb der axialen Erstreckung der Bodenaufstandsfläche TA.

Die Profilblockelemente 32 , 33 und 34 der Profilblockreihen 2,3 und 4 sind jeweils mit mehreren im wesentlichen parallel zu einander ausgebildeten Lamellen 15, 16 und 17 ausgebildet, die sich über den jeweiligen gesamten Profilblock erstrecken und auf beiden Seiten jeweils in einer Umfangs- bzw Querrille münden.

Die Lamellen 15, 16, 17 sind dabei, wie in Figur 5 an einem zur Vereinfachung quadratischen Profilblockelement schematisch dargestellt, ausgebildet. Die Lamellen sind mit einem Winkel zwischen 70 und 110° zur Hauptdiagonalen ausgebildet, wie in Fig.5b dargestellt. Die Gesamtlamellenlänge des Profilblockelementes ist hierdurch größer als bei Ausbildung der Lamellen mit einem 45° - Winkel zur Hauptdiagonalen, wie in Fig.5a dargestellt ist.

Die Lamellen 14, 15, 16, 17, 18 sind in ihren jeweiligen Profilblockelementen jeweils so angeordnet , daß der Abstand zwischen den einzelnen benachbarten Lamellen innerhalb eines Profilblockelementes im wesentlichen gleich ist und daß der Rand des Profilblockelementes nebender außenliebenden Lamellen in senkrechter Richtung zur Lamellenausrichtung eine maximale Breite aufweist, die um 7 bis 15 %größer ist als die Breite der Abstände zwischen den Lamellen dieses Profilblockelementes.

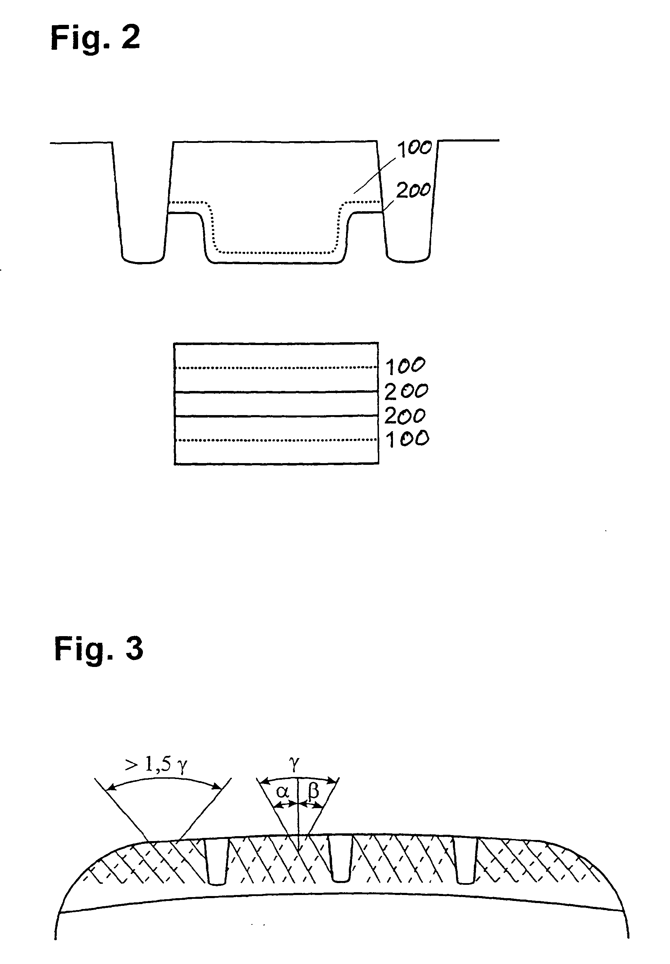

Der Tiefenverlauf der Lamellen 14,15,16,17,18 ist, wie in Fig.2 an einem beispielhaft dargestellten Profilblockelement mit Lamellen 100 und 200 schematisch dargestellt ist, ausgebildet. Die Lamellen sind jeweils mit im wesentlichen konstanter Tiefe ausgebildet, die jedoch im Randbereich des Profilblocks um 35 bis 65 % reduziert ist. Die Lamellen 100,die dem Profilblockrand am Nächsten liegen sind weniger tief ausgebildet als die Lamellen 200 im innern des Profilblockelementes.

Der Randbereich ist zwischen 3 und 6 mm dick

Die Lamellen sind 14,15,16,17,18 mit Ausnahme des Randbereichs der jeweiligen Profilblockelemente jeweils mit einem sinusförmigen Verlauf in der Klotzoberfläche ausgebildet. Auch entlang ihrer Tiefenerstreckung ist der Verlauf in Schnittebenen wie in der Patentanmeldung P 196 50 702.2 beschrieben parallel zur Profilklotzoberfläche sinusförmig jedoch mit zunehmender Tiefe mit zunehmender Phasenverschiebung. Die Phasenverschiebung in Tiefenrichtung erfolgt entlang einer Geraden, die mit der Radialen einen Winkel >0° einschließt. Wie in Fig. 3 dargestellt ist, findet bei zwei benachbarten Lamellen eines Profilblockelementes die Phasenverschiebung entlang zweier unterschiedlicher Geraden mit zwei entgegengesetzten Steigungsrichtungen statt. Die Steigungswinkel der beiden Geraden zur Radialen in einer Ebene sind Alpha und Beta. Die Lamellen eines Profilblockelementes sind wie in der Patentanmeldung P 196 50 702.2 beschrieben altemierend mit einer Phasenverschiebung mit dem Steigungswinkel Alpha und mit einer Phasenverschiebung um den Steigungswinkel Beta ausgebildet. Die Profilblockelemente werden hierdurch verschränkt. Der Summenwinkel Gamma = Alpha + Beta ist ein Maß für die Verschränkung. Gamma ist in den Profilblockelementen 35 der Profilblockreihe 5 größer als in den Profilblockelementen 31,32,33,34 der Profilblockreihen 1,2,3,4. Beispielsweise beträgt Gamma in den Profilblockelementen 35 40° und in den Profilblockelementen 31,32,33,34 20°.

Die Breite der Lamellen 14 bis 18 beträgt 0,3 bis 0,6 mm , beispielsweise 0,4 mm.

Die Breite der Querrillen 9,10,12,13 beträgt 3 bis 8 mm.
Die Breite der schmalen Querrillen 11 beträgt 1 bis 2 mm, beispielsweise 1,1 mm.

Zur Entlüftung der Lamellen 16, 17, 18 sind in den Profilblockelementen 33,34,35 zusätzlich quer zur Lamellenrichtung verlaufende Entlüftungslamellen 13 mit einer Breite von 0,8 bis 1,3 mm ausgebildet, die die benachbarten Lamellen miteinander un die Randlamellen mit den angrenzenden Rillen verbinden. Lufteinschlüsse werden hierdurch vermieden.

In der Profilblockreihe 2 ist zuätzlich eine geradlinige umfangsgerichtete Rille 22 mit 1 bis 2 mm Breite und mit 1,5 mm Tiefe ausgebildet.

Der Winterreifen ist ein schlauchloser Fahrzeugluftreifen bekannter radialer Bauart mit Gürtel mit Festigkeitsträgem aus Stahl oder Aramid und - falls erforderlich mit zusätzlicher bekannter Gürtelbandage aus wendelförmig gewickeltem oder nebeneinander aufgelegtem Bandagematerial mit bekannten geeigneten Festigkeitsträgern - beispielsweise Nylon.

### Bezugszeichenliste

- 1: Profilblockreihe
- 2: Profilblockreihe
- 3: Profilblockreihe
- 4: Profüblockreihe
- 5: Profilblockreihe
- 6: Umfansrille
- 7: Umfansrille
- 8: Umfansrille
- 9: Querrille
- 10: Querrille
- 11: Querrille
- 12: Querrille
- 13: Querrille
- 14: Lamelle
- 15: Lamelle
- 16: Lamelle
- 17: Lamelle
- 18: Lamelle
- 19: Lamelle
- 20: Lamelle
- 21: Lamelle
- 22: Umfangslamelle
- 31: Profilblockelement
- 32: Profilblockelement
- 33: Profilblockelement
- 34: Profilblockelement
- 35: Profilblockelement
- 100: Lamelle
- 200: Lamelle

## Patentansprüche

1. Asymmetrisches Laufflächenprofil eines Winterreifens für Fahrzeuge mit wenigstens zwei außerhalb der Fahrzeuglängsachse ausgebildeten Fahrzeugrädern
- mit in achsialer Richtung von Reifenschulter zu Reifenschulter verteilt angeordneten und durch Umfangsrillen (6, 7, 8) axial voneinander beabstandeten in Umfangsrichtung ausgerichteten Profilblockreihen (1-5),
- bei dem eine erste Umfangsrille (7) das Laufflächenprofil in zwei funktional unterschiedlich ausgebildete Bereiche (A; I) aufteilt, die sich axial jeweils von der zugehörigen Reifenschulter bis zu dieser ersten Umfangsrille (7) erstrecken,
- wobei die Profilblockelemente (31, 32) in dem axialen Bereich (A), der sich von dieser Umfangsrille (7) bis zur im Betriebszustand des Reifens am Fahrzeug zur Fahrzeugaußenseite weisenden Schulter ersteckt, mit einer höheren Querschubsteifigkeit ausgebildet sind als die Profilblockelemente (33, 34, 35) in dem axialen Bereich (I), der sich von dieser ersten Umfangsrille (7) bis zur im Betriebszustand des Reifens am Fahrzeug zur Fahrzeuginnenseite weisenden Schulter ersteckt,
**dadurch gekennzeichnet, dass** in dem axialen Bereich, der sich von dieser ersten Umfangsrille bis zur im Betriebszustand des Reifens am Fahrzeug zur Fahrzeuginnenseite weisenden Schulter ersteckt, wenigstens eine weitere Profilblockreihe ausgebildet ist, die durch eine Umfangsrille bzw. Umfangsnut von der Profilblockreihe, die in der im Betriebszustand des Reifens am Fahrzeug zur Fahrzeuginnenseite weisenden Schulter, ausgebildet ist getrennt ist,
- wobei die Profilblockelemente sowohl der Schulterblockreihe als auch der weiteren Profilblockreihe(n) jeweils mit mehreren voneinander beabstandeten Querlamellen mit sinusförmigem Verlauf in Längsrichtung der Lamelle ausgebildet sind, wobei der Verlauf der Lamelle entlang ihrer Tiefenerstreckung kontinuierlich in Längsrichtung der Lamelle phasenversetzt ausgebildet ist, so daß der Phasenversatz längs der Tiefenerstreckung entlang einer Steigungslinie unter einem Steigungswinkel Alpha zur Radialen erfolgt, wobei hierzu benachbarte Lamellen des Profilblockelementes eine dieser Steigung entgegengerichtete Steigung entlang einer Steigungslinie mit einem Steigungswinkel Beta zur Radialen des Phasenversatzes aufweisen, so daß die beiden entgegengesetzt steigend ausgebildeten Steigungslinien zueinander einen Winkel GAMMA =ALPHA +BETA einschließen, der ein Maß für die Verschränkung der Lamellen der Profilblockelemente ist,
- wobei der Verschränkungswinkel Gamma der Profilblockelemente der Schulterblockreihe größer als der Verschränkungswinkel Gamma der weiteren Profilblockreihe(n) ist;
- wobei insbesondere der Verschränkungswinkel Gamma der Profilblockelemente der Schulterblockreihe zwischen 35 und 60 ° und der Verschränkungswinkel Gamma der weiteren Profilblockreihe(n) zwischen 15 und 25° beträgt.

2. Asymmetrisches Laufflächenprofil eines Winterreifens gemäß den Merkmalen des Anspruchs 1,
- wobei sowohl der Strukturfaktor längs in Umfangsrichtung als auch der Strukturfaktor quer zur Umfangsrichtung in den Profilblockelementen (33, 34, 35) in dem axialen Bereich (T), der sich von dieser Umfangsrille (7) bis zur im Betriebszustand des Reifens am Fahrzeug zur Fahrzeuginnenseite weisenden Schulter ersteckt, zwischen 10 und 50 % höher ist als in den Profilblockelementen (31, 32) in dem axialen Bereich (A), der sich von dieser ersten Umfangsrille bis zur im Betriebszustand des Reifens am Fahrzeug zur Fahrzeugaußenseite weisenden Schulter ersteckt.

3. Asymmetrisches Laufflächenprofil eines Winterreifens gemäß den Merkmalen von einem oder mehreren der vorangegangenen Ansprüche,
- wobei sowohl in dem axialen Bereich (I), der sich von dieser ersten Umfangsrille (7) bis zur im Betriebszustand des Reifens am Fahrzeug zur Fahrzeuginnenseite weisenden Schulter ersteckt, als auch in dem axialen Bereich (A), der sich von dieser ersten Umfangsrille bis zur im Betriebszustand des Reifens am Fahrzeug zur Fahrzeugaußenseite weisenden Schulter ersteckt, jeweils wenigstens eine weitere Umfangsrille (6; 8) bzw. Umfangsnut ausgebildet ist, die jeweils zwei Profilblockreihen (1, 2; 3, 4, 5) voneinander trennt,
- wobei der freie Nutquerschnitt der Umfangsrille bzw Umfangsnut in dem axialen Bereich (I), der sich von dieser Umfangsrille bis zur im Betriebszustand des Reifens am Fahrzeug zur Fahrzeuginnenseite weisenden Schulter ersteckt, kleiner ist als der freie Nutquerschnitt der Umfangsrille bzw. Umfangsnut in dem axialen Bereich, der sich von dieser Umfangsrille bis zur im Betriebszustand des Reifens am Fahrzeug zur Fahrzeugaußenseite weisenden Schulter ersteckt, wobei er jedoch mindestens halb so groß ist wie der freie Nutquerschnitt sowohl der ersten Umfangsrille bzw. Umfangsnut als auch der weiteren Umfangsrille bzw. Umfangsnut in dem axialen Bereich, der sich von dieser Umfangsrille bis zur im Betriebszustand des Reifens am Fahrzeug zur Fahrzeugaußenseite weisenden Schulter ersteckt.

4. Asymmetrisches Laufflächenprofil eines Winterreifens gemäß den Merkmalen von einem oder mehreren der vorangegangenen Ansprüche,
- wobei der Abstand zwischen einem Lamellenabschnitt, der in seinem Verlauf der Kontur einer Profilblockkante gleichgerichtet ist, einer zu dieser Profilblockkante nächstgelegenen Lamelle - insbesondere 7 bis 15 % - größer ist als der Abstand zwischen den gleichgerichteten Lamellenabschnitten benachbarter Lamellen dieses Profilblockelements.

5. Asymmetrisches Laufflächenprofil eines Winterreifens gemäß den Merkmalen von einem oder mehreren der vorangegangenen Ansprüche,
- wobei Profilblockelemente der Profilblockreihen in dem axialen Bereich, der sich von dieser ersten Umfangsrille bis zur im Betriebszustand des Reifens am Fahrzeug zur Fahrzeuginnenseite weisenden Schulter ersteckt, mit mehreren voneinander beabstandeten, sich über das Profilblockelement erstreckenden Lamellen ausgebildet sind,
- wobei der Tiefenverlauf der Lamellen eines Profilblockelementes durch das Profilblockelement mit einer Tiefe am Rand des Profilblockelementes - insbesondere 10 bis 20 % - kleiner als zwischen den Rändern im Innern des Profilblockelements ausgebildet ist.

6. Asymmetrisches Laufflächenprofil eines Winterreifens gemäß den Merkmalen von einem oder mehreren der vorangegangenen Ansprüche,
- wobei die Profilblockelemente der Profilblockreihe mit mehreren voneinander beabstandeten, sich über das Profilblockelement erstreckenden Lamellen ausgebildet sind, wobei die Lamellen in ihrer Ausrichtung einen Winkel zwischen 80 und 110 ° zu der längeren Diagonalen des durch die Querkanten und die Längskanten gebildeten Trapezes einschließen.

7. Asymmetrisches Laufflächenprofil eines Winterreifens gemäß den Merkmalen von einem oder mehreren der vorangegangenen Ansprüche,
- bei dem die Profilblockreihen in den Reifenschultern und wenigstens eine weitere Profilblockreihe ausgebildet ist, die zwischen den Reifenschultern angeordnet ist, wobei die Profilblockreihen jeweils aus in Umfangsrichtung hintereinander angeordneten und durch schräg verlaufende Querrillen voneinander beabstandete Profilblockelemente ausgebildet sind, so daß die Profilblockelemente mit schräg verlaufenden, die Profilblockelemente in Umfangsrichtung begrenzenden Querkanten ausgebildet sind,
- bei dem die Profilblockelemente der Profilblockreihen in axialer Richtung mit seitlich die Profilblockelemente begrenzenden Längskanten ausgebildet sind,
- wobei die Profilblockelement der Profilblockreihen mit mehreren voneinander beabstandeten, sich über das Profilblockelement erstreckenden Lamellen ausgebildet sind,
- wobei die Lamellen der Schulterprofilblockreihen in ihrer Ausrichtung parallel zu den die Profilblockelemente in der jeweiligen Schulterprofilblockreihe in Umfangsrichtung begrenzenden Querrille ausgebildet sind, und
- wobei die Lamellen der zwischen den Schulterprofilblockreihen ausgebildeten Profilblockreihe in ihrer Ausrichtung einen Winkel zwischen 80 und 110 ° zu der Hauptdiagonalen des durch die Querkanten und die Längskanten gebildeten Trapezes einschließen.

8. Asymmetrisches Laufflächenprofil eines Winterreifens gemäß den Merkmalen von einem oder mehreren der vorangegangenen Ansprüche,
- wobei in dem axialen Bereich, der sich von dieser ersten Umfangsrille bis zur im Betriebszustand des Reifens am Fahrzeug zur Fahrzeuginnenseite weisenden Schulter ersteckt, eine weitere Profilblockreihe ausgebildet ist, die durch eine Umfangsrille bzw. Umfangsnut von der Profilblockreihe, die in der im Betriebszustand des Reifens am Fahrzeug zur Fahrzeuginnenseite weisenden Schulter, ausgebildet ist getrennt ist,
- wobei diese beiden benachbarten Profilblockreihen jeweils aus in Umfangsrichtung hintereinander angeordneten und durch schräg verlaufende Querrillen voneinander beabstandete Profilblockelemente ausgebildet sind, so daß die Profilblockelemente mit schräg verlaufenden, die Profilblockelemente in Umfangsrichtung begrenzenden Querkanten ausgebildet sind, wobei sich die Querrillen über beide Profilblockreihen aus- gehend von der Reifenschulter nach axial innen hin unter stetiger Steigung erstrecken, wobei die Querrillen beim Übergang durch die Umfangsrille in Umfangsrichtung derart versetzt zu einander ausgebildet sind, daß das zur Umfangsrille weisende Ende der Querrille in der Schulterblockreihe die gleiche Umfangsposition wie das zur Umfangsrille weisende Ende der Querrille in der weiteren Profilblockreihe einnimmt.

9. Asymmetrisches Laufflächenprofil eines Winterreifens gemäß den Merkmalen von einem oder mehreren der vorangegangenen Ansprüche,
**dadurch gekennzeichnet, dass** die Pitchzahl in dem axialen Bereich (I), der sich von dieser ersten Umfangsrille (7) bis zur im Betriebszustand des Reifens am Fahrzeug zur Fahrzeuginnenseite weisenden Schulter erstreckt, größer ist als in dem axialen Bereich (A), der sich von dieser ersten Umfangsrille (7) bis zur im Betriebszusand des Reifens am Fahrzeug zur Fahrzeugaußenseite weisenden Schulter erstreckt,
- wobei wenigstens die Profilblockelemente der Profilblockreihen in dem axialen Bereich, der sich von dieser ersten Umfangsrille bis zur im Betriebszustand des Reifens am Fahrzeug zur Fahrzeuginnenseite weisenden Schulter erstreckt, mit mehreren voneinander beabstanden, sich über das Profilblockelement erstreckenden Lamellen ausgebildet sind,
- wobei bei dem Laufflächenprofil zumindest zwei Profilblockreihen (3, 4, 5) aus in Umfangsrichtung hintereinander angeordneten und durch schräg verlaufende Querrillen (11, 12, 13) voneinander beabstandete Profilblockelemente (33, 34, 35) ausgebildet sind, so daß die Profilblockelemente (33, 34, 35) mit schräg verlaufenden, die Profilblockelemente (33, 34, 35) in Umfangsrichtung begrenzenden Querkanten ausgebildet sind, und
- die Profilblockelemente (33, 34, 35) dieser Profilblockreihen (3, 4, 5) in axialer Richtung mit seitlich die Profilblockelemente (33, 34, 35) begrenzenden Längskanten ausgebildet sind.

10. Asymmetrisches Laufflächenprofil eines Winterreifens gemäß den Merkmalen von einem oder mehreren der vorangegangenen Ansprüche,
- wobei zwischen den Profilblockreihen jeweils eine Umfangsrille bzw. Umfangsnut ausgebildet ist,
- wobei die Profilblockelemente sowohl wenigstens einer Schulterblockreihe als auch der weiteren Profilblockreihe(n) jeweils mit mehreren voneinander beabstandeten Querlamellen mit sinusförmigem Verlauf in Längsrichtung der Lamelle ausgebildet sind, wobei der Verlauf der Lamelle entlang ihrer Tiefenerstreckung kontinuierlich in Längsrichtung der Lamelle phasenversetzt ausgebildet ist, so daß der Phasenversatz längs der Tiefenerstreckung entlang einer Steigungslinie unter einem Steigungswinkel Alpha zur Radialen erfolgt, wobei hierzu benachbarte Lamellen des Profilblockelementes eine dieser Steigung entgegengerichtete Steigung entlang einer Steigungslinie mit einem Steigungswinkel Beta zur Radialen des Phasenversatzes aufweisen, so daß die beiden entgegengesetzt steigend ausgebildeten Steigungslinien zueinander einen Winkel GAMMA =ALPHA +BETA einschließen, der ein Maß für die Verschränkung der Lamellen der Profilblockelemente ist,
- wobei der Verschränkungswinkel Gamma der Profilblockelemente der Schulterblockreihe größer als der Verschränkungswinkel Gamma der weiteren Profilblockreihe(n) ist;
- wobei insbesondere der Verschränkungswinkel Gamma der Profilblockelemente der Schulterblockreihe zwischen 35 und 60 ° und der Verschränkungswinkel Gamma der weiteren Profilblockreihe(n) zwischen 15 und 25 ° beträgt.

## Claims

1. Asymmetrical tread pattern of a winter tyre for motor vehicles having at least two vehicle wheels outside the longitudinal axis of the vehicle,
- with pattern block rows (1-5) distributed in an axial direction from tyre shoulder to tyre shoulder and aligned axially separated from one another in a circumferential direction by circumferential grooves (6, 7, 8),
- a first circumferential groove (7) dividing the tread pattern into two areas (A; I) of different functional design, which in each case extend axially from the associated tyre shoulder to this first circumferential groove(7),
- the pattern block elements (31, 32) in the axial area (A), which extends from this circumferential groove (7) to the shoulder facing the outside of the vehicle in the operating state of the tyre on the vehicle, being designed with a higher transverse shear rigidity than the pattern block elements (33, 34, 35) in the axial area (I), which extends from this first circumferential groove (7) to the shoulder facing the inside of the vehicle in the operating state of the tyre on the vehicle,
**characterized in that** the axial area which extends from this first circumferential groove to the shoulder facing the inside of the vehicle in the operating state of the tyre on the vehicle is formed with at least one further pattern block row, which is separated by a circumferential groove or circumferential channel from the pattern block row which is formed in the shoulder facing the inside of the vehicle in the operating state of the tyre on the vehicle,
- the pattern block elements both of the shoulder block row and of the further pattern block row(s) each being formed with a plurality of spaced transverse blades having a sinusoidal shape in the longitudinal direction of the blade, the shape of the blade over its depth being continuously phase-offset in the longitudinal direction of the blade, so that the phase offset over the depth occurs along a pitch line at an angle of inclination alpha to the radial, adjacent blades of the pattern block element moreover having a pitch opposed to this pitch along a pitch line at an angle of inclination beta to the radial of the phase offset, so that the two pitch lines rising in opposite directions enclose an angle GAMMA=ALPHA+BETA with one another, which is a measure of the twisting of the blades of the pattern profile elements,
- the twist angle gamma of the pattern block elements of the shoulder block row being greater than the twist angle gamma of the further pattern block row(s),
- the twist angle gamma of the pattern block elements of the shoulder block row in particular being between 35 and 60° and the twist angle gamma of the further pattern block row(s) being between 15 and 25°.

2. Asymmetrical tread pattern of a winter tyre according to the features of Claim 1,
- in which the structural factor both longitudinally in the circumferential direction and transversely to the circumferential direction is 10 to 50% higher in the pattern block elements (33, 34, 35) in the axial area (T), which extends from this circumferential groove (7) to the shoulder facing the inside of the vehicle in the operating state of the tyre on the vehicle, than in the pattern block elements (31, 32) in the axial area (A), which extends from this first circumferential groove to the shoulder facing the outside of the vehicle in the operating state of the tyre on the vehicle.

3. Asymmetrical tread pattern of a winter tyre according to the features of one or more of the preceding claims,
- in which at least one further circumferential groove (6; 8) or circumferential channel, which in each case separates two pattern block rows (1, 2; 3, 4, 5) from one another, is formed both in the axial area (I), which extends from this first circumferential groove (7) to the shoulder facing the inside of the vehicle in the operating state of the tyre on the vehicle, and in the area (A) which extends from this first circumferential groove to the shoulder facing the outside of the vehicle in the operating state of the tyre on the vehicle, and
- the clear channel cross-section of the circumferential groove or circumferential channel in the axial area (I), which extends from this circumferential groove to the shoulder facing the inside of the vehicle in the operating state of the tyre on the vehicle, being smaller than the clear channel cross-section of the circumferential groove or circumferential channel in the axial area which extends from this circumferential groove to the shoulder facing the outside of the vehicle in the operating state of the tyre on the vehicle, said channel cross-section, however, being at least half the size of the clear channel cross-section both of the first circumferential groove or circumferential channel and of the further circumferential groove or circumferential channel in the axial area which extends from this first circumferential groove to the shoulder facing the outside of the vehicle in the operating state of the tyre on the vehicle.

4. Asymmetrical tread pattern of a winter tyre according to the features of one or more of the preceding claims,
- in which the distance between a blade section, which in its shape is parallel to the contour of a pattern block edge of a blade immediately adjacent to this pattern block edge, is greater, in particular 7 to 15% greater, than the distance between the parallel blade sections of adjacent blades of this pattern block element.

5. Asymmetrical tread pattern of a winter tyre according to the features of one or more of the preceding claims,
- in which pattern block elements of the pattern block rows in the axial area, which extends from this first circumferential groove to the shoulder facing the inside of the vehicle in the operating state of the tyre on the vehicle, are formed with a plurality of spaced blades extending over the pattern block element, and
- the depth pattern of the blades of a pattern block element through a pattern block element being formed with a depth at the edge of the pattern block element less than, in particular 10 to 20% less than between the edges in the interior of the pattern block element.

6. Asymmetrical tread pattern of a winter tyre according to the features of one or more of the preceding claims,
- in which the pattern block elements of the pattern block row are formed with a plurality of spaced blades extending over the pattern block element, the blades in their alignment enclosing an angle of between 80 and 110° with the longer diagonal of the trapezium formed by the transverse edges and the longitudinal edges.

7. Asymmetrical tread pattern of a winter tyre according to the features of one or more of the preceding Claims,
- in which the pattern block rows are formed in the tyre shoulders and at least one further pattern block row is arranged between the tyre shoulders, the pattern block rows in each case being formed from pattern block elements arranged in series in a circumferential direction and separated from one another by transverse grooves running obliquely, so that the pattern block elements are formed with obliquely running transverse edges defining the pattern block elements in a circumferential direction, and
- the pattern block elements of the pattern block rows in an axial direction being formed with longitudinal edges laterally defining the pattern block elements,
- the pattern block elements of the pattern block rows being formed with a plurality of spaced blades extending over the pattern block element,
- the blades of the shoulder pattern block rows being formed in parallel alignment with the transverse grooves circumferentially defining the pattern block elements in the respective shoulder pattern block row, and
- the blades of the pattern block row formed between the shoulder pattern block rows in their alignment enclosing an angle of between 80 and 110° with the main diagonal of the trapezium formed by the transverse edges and the longitudinal edges.

8. Asymmetrical tread pattern of a winter tyre according to the features of one or more of the preceding claims,
- in which a further pattern block row, which is formed by a circumferential groove or circumferential channel of the pattern block row, which is formed in the shoulder facing the inside of the vehicle in the operating state of the tyre on the vehicle, is formed in the axial area which extends from this first circumferential groove to the shoulder facing the inside of the vehicle in the operating state of the tyre on the vehicle, and
- these two adjoining pattern block rows being in each case formed from pattern block elements arranged in series in a circumferential direction and separated from one another by transverse grooves running obliquely, so that the pattern block elements are formed with obliquely running transverse edges defining the pattern block elements in a circumferential direction, the transverse grooves extending over both pattern block rows from the tyre shoulder axially inwards at a constant pitch, the transverse grooves in the passage through the circumferential groove being circumferentially offset in relation to one another in such a way that the end of the transverse groove in the shoulder block row pointing towards the circumferential groove assumes the same circumferential position as the end of the transverse groove in the further pattern block row pointing towards the circumferential groove.

9. Asymmetrical tread pattern of a winter tyre according to the features of one or more of the preceding claims,
**characterized in that** the pitch number in the axial area (I), which extends from this first circumferential groove (7) to the shoulder facing the inside of the vehicle in the operating state of the tyre on the vehicle, is greater than in the axial area (A), which extends from this first circumferential groove (7) to the shoulder facing the outside of the vehicle in the operating state of the tyre on the vehicle,
- at least the pattern block elements of the pattern block rows in the axial area, which extends from this first circumferential groove to the shoulder facing the inside of the vehicle in the operating state of the tyre on the vehicle, being formed with a plurality of spaced blades extending over the pattern block element,
- at least two pattern block rows (3, 4, 5) in the tread pattern being formed from pattern block elements (33, 34, 35) arranged in series in a circumferential direction and separated from one another by transverse grooves (11, 12, 13) running obliquely, so that the pattern block elements (33, 34, 35) are formed with obliquely running transverse edges defining the pattern block elements (33, 34, 35) in a circumferential direction, and
- the pattern block elements (33, 34, 35) of these pattern block rows (3, 4, 5) in an axial direction being formed with longitudinal edges laterally defining the pattern block elements (33, 34, 35).

10. Asymmetrical tread pattern of a winter tyre according to the features of one or more of the preceding claims,
- in which a circumferential groove or circumferential channel is in each case formed between pattern block rows,
- the pattern block elements both of the shoulder block row and of the further pattern block row(s) being each formed with a plurality of spaced transverse blades having a sinusoidal shape in the longitudinal direction of the blade, the shape of the blade over its depth being continuously phase-offset in the longitudinal direction of the blade, so that the phase offset over the depth occurs along a pitch line at an angle of inclination alpha to the radial, adjacent blades of the pattern block element moreover having a pitch opposed to this pitch along a pitch line at an angle of inclination beta to the radial of the phase offset, so that the two pitch lines rising in opposite directions enclose and angle GAMMA=ALPHA+BETA with one another, which is a measure of the twisting of the blades of the pattern profile elements,
- the twist angle gamma of the pattern block elements of the shoulder block row being greater than the twist angle gamma of the further pattern block row(s), and
- the twist angle gamma of the pattern block elements of the shoulder block row being in particular between 35 and 60° and the twist angle gamma of the further pattern block row(s) is between 15 and 25°.

## Revendications

1. Profil de bande de roulement asymétrique d'un pneu d'hiver pour véhicules, avec au moins deux roues de véhicule réalisées en dehors de l'essieu longitudinal du véhicule,
- avec des rangées de blocs profilés (1-5) répartis dans la direction axiale d'un épaulement de pneu à un autre et orientés dans la direction périphérique de manière espacée axialement les uns des autres par des gorges périphériques (6, 7, 8),
- une première gorge périphérique (7) divisant le profil de bande de roulement en deux régions (A ; I) réalisées différemment du point de vue fonctionnel, qui s'étendent axialement à chaque fois depuis l'épaulement de pneu associé jusqu'à cette première gorge périphérique (A),
- les éléments de blocs profilés (31, 32) étant réalisés dans la région axiale (A) qui s'étend depuis cette gorge périphérique (7) jusqu'à l'épaulement tourné vers le côté extérieur du véhicule dans l'état de fonctionnement du pneu sur le véhicule, avec une rigidité en poussée transversale supérieure aux éléments de blocs profilés (33, 34, 35) dans la région axiale (I) qui s'étend depuis cette première gorge périphérique (7) jusqu'à l'épaulement tourné vers le côté intérieur du véhicule dans l'état de fonctionnement du pneu sur le véhicule,
**caractérisé en ce que** dans la région axiale, qui s'étend depuis cette première gorge périphérique jusqu'à l'épaulement tourné vers le côté intérieur du véhicule dans l'état de fonctionnement du pneu sur le véhicule, au moins une autre rangée de blocs profilés est réalisée, laquelle est séparée par une gorge périphérique ou une rainure périphérique de la rangée de blocs profilés qui est réalisée dans l'épaulement tourné vers le côté intérieur du véhicule dans l'état de fonctionnement du pneu sur le véhicule,
- les éléments de blocs profilés de la rangée de blocs profilés ainsi que de l'autre ou des autres rangées de blocs profilés étant réalisés à chaque fois avec plusieurs lamelles transversales espacées les unes des autres avec une allure sinusoïdale dans la direction longitudinale des lamelles, l'allure des lamelles le long de leur étendue en profondeur étant réalisée avec un décalage de phase en continu dans la direction longitudinale des lamelles, de sorte que le décalage des lamelles le long de l'étendue en profondeur s'effectue le long d'une ligne d'inclinaison suivant un angle d'inclinaison alpha par rapport à la radiale, des lamelles voisines de l'élément de bloc profilé présentant à cet effet une inclinaison opposée à cette inclinaison le long d'une ligne d'inclinaison avec un angle d'inclinaison bêta par rapport à la radiale du décalage de phase, de sorte que les deux lignes d'inclinaison réalisées avec des inclinaisons opposées forment entre elles un angle gamma = alpha + bêta, qui est une mesure de l'entrecroisement des lamelles des éléments de blocs profilés,
- l'angle d'entrecroisement gamma des éléments de blocs profilés de la rangée de blocs d'épaulement étant supérieur à l'angle d'entrecroisement gamma de l'autre ou des autres rangées de blocs profilés ;
- en particulier l'angle d'entrecroisement gamma des éléments de blocs profilés de la rangée de blocs d'épaulement étant compris entre 35 et 60° et l'angle d'entrecroisement gamma de l'autre ou des autres rangées de blocs profilés étant compris entre 15 et 25°.

2. Profil de bande de roulement asymétrique d'un pneu d'hiver selon les caractéristiques de la revendication 1,
- dans lequel le facteur de structure le long de la direction périphérique ainsi que le facteur de structure transversalement à la direction périphérique dans les éléments de blocs profilés (33, 34, 35) dans la région axiale (T) qui s'étend depuis cette gorge périphérique (7) jusqu'à l'épaulement tourné vers le côté intérieur du véhicule dans l'état de fonctionnement du pneu sur le véhicule, est supérieur de 10 à 50% à celui dans les éléments de blocs profilés (31, 32) dans la région axiale (A) qui s'étend depuis cette première gorge périphérique jusqu'à l'épaulement tourné vers le côté extérieur du véhicule dans l'état de fonctionnement du pneu sur le véhicule.

3. Profil de bande de roulement asymétrique d'un pneu d'hiver selon les caractéristiques d'une ou de plusieurs des revendications précédentes,
- dans lequel à la fois dans la région axiale (I), qui s'étend depuis cette première gorge périphérique (7) jusqu'à l'épaulement tourné vers le côté intérieur du véhicule dans l'état de fonctionnement du pneu sur le véhicule, ainsi que dans la région axiale (A), qui s'étend depuis cette première gorge périphérique jusqu'à l'épaulement tourné vers le côté extérieur du véhicule dans l'état de fonctionnement du pneu sur le véhicule, à chaque fois au moins une autre gorge périphérique (6 ; 8) ou une rainure périphérique est réalisée, laquelle sépare l'une de l'autre deux rangées de blocs profilés (1, 2 ; 3, 4, 5),
- la section transversale de rainure libre de la gorge périphérique ou de la rainure périphérique, dans la région axiale (I) qui s'étend depuis cette gorge périphérique jusqu'à l'épaulement tourné vers le côté intérieur du véhicule dans l'état de fonctionnement du pneu sur le véhicule, étant plus petite que la section transversale de rainure libre de la gorge périphérique ou de la rainure périphérique dans la région axiale, qui s'étend depuis cette gorge périphérique jusqu'à l'épaulement tourné vers le côté extérieur du véhicule dans l'état de fonctionnement du pneu sur le véhicule, cette section transversale de rainure libre étant toutefois au moins plus petite de moitié que la section transversale de rainure libre de la première gorge périphérique ou rainure périphérique ainsi que de l'autre gorge périphérique ou rainure périphérique dans la région axiale, qui s'étend depuis cette gorge périphérique jusqu'à l'épaulement tourné vers le côté extérieur du véhicule dans l'état de fonctionnement du pneu sur le véhicule.

4. Profil de bande de roulement asymétrique d'un pneu d'hiver selon les caractéristiques d'une ou de plusieurs des revendications précédentes,
- dans lequel la distance entre une portion de lamelle, qui est orientée dans son allure dans le même sens que le contour d'une arête de bloc profilé, et une lamelle adjacente à cette arête de bloc profilé, est supérieure - notamment de 7 à 15% - à la distance entre les portions de lamelles orientées dans le même sens de lamelles voisines de cet élément de bloc profilé.

5. Profil de bande de roulement asymétrique d'un pneu d'hiver selon les caractéristiques d'une ou de plusieurs des revendications précédentes,
- dans lequel des éléments de blocs profilés des rangées de blocs profilés dans la région axiale, qui s'étend depuis cette première gorge périphérique jusqu'à l'épaulement tourné vers le côté intérieur du véhicule dans l'état de fonctionnement du pneu sur le véhicule, sont réalisés avec plusieurs lamelles s'étendant sur l'élément de bloc profilé, espacées les unes des autres,
- l'allure en profondeur des lamelles d'un élément de bloc profilé étant réalisée à travers l'élément de bloc profilé avec une profondeur au bord de l'élément de bloc profilé qui est plus petite - notamment de 10 à 20% qu'entre les bords à l'intérieur de l'élément de bloc profilé.

6. Profil de bande de roulement asymétrique d'un pneu d'hiver selon les caractéristiques d'une ou de plusieurs des revendications précédentes,
- dans lequel les éléments de blocs profilés de la rangée de blocs profilés sont réalisés avec plusieurs lamelles espacées les unes des autres, s'étendant sur l'élément de bloc profilé, les lamelles formant dans leur orientation un angle entre 80 et 110° par rapport à la diagonale longue du trapèze formé par les arêtes transversales et les arêtes longitudinales.

7. Profil de bande de roulement asymétrique d'un pneu d'hiver selon les caractéristiques d'une ou de plusieurs des revendications précédentes,
- dans lequel les rangées de blocs profilés sont réalisées dans les épaulements de pneu et au moins une rangée de blocs profilés supplémentaire est disposée entre les épaulements de pneu, les rangées de blocs profilés étant réalisées à chaque fois à partir d'éléments de blocs profilés disposés les uns derrière les autres dans la direction périphérique et espacés les uns des autres par des gorges transversales obliques, de sorte que les éléments de blocs profilés soient réalisés avec des arêtes transversales s'étendant obliquement, limitant les éléments de blocs profilés dans la direction périphérique,
- les éléments de blocs profilés des rangées de blocs profilés étant réalisés dans la direction axiale avec des arêtes longitudinales limitant latéralement les éléments de blocs profilés,
- les éléments de blocs profilés des rangées de blocs profilés étant réalisés avec plusieurs lamelles espacées les unes des autres, s'étendant sur l'élément de bloc profilé,
- les lamelles des rangées de blocs profilés d'épaulement étant réalisées dans leur orientation parallèlement aux gorges transversales limitant dans la direction périphérique les éléments de blocs profilés dans la rangée de blocs profilés d'épaulement respective, et
- les lamelles de la rangée de blocs profilés réalisée entre les rangées de blocs profilés d'épaulement formant dans leur orientation un angle compris entre 80 et 110° par rapport à la diagonale principale du trapèze formé par les arêtes transversales et les arêtes longitudinales.

8. Profil de bande de roulement asymétrique d'un pneu d'hiver selon les caractéristiques d'une ou de plusieurs des revendications précédentes,
- dans lequel, dans la région axiale qui s'étend depuis cette première gorge périphérique jusqu'à l'épaulement tourné vers le côté intérieur du véhicule dans l'état de fonctionnement du pneu sur le véhicule, est réalisée une rangée de blocs profilés supplémentaire, qui est séparée par une gorge périphérique ou une rainure périphérique de la rangée de blocs profilés qui est réalisée dans l'épaulement tourné vers le côté intérieur du véhicule dans l'état de fonctionnement du pneu sur le véhicule,
- ces deux rangées de blocs profilés voisines étant réalisées à chaque fois à partir d'éléments de blocs profilés espacés les uns des autres par des gorges transversales s'étendant obliquement et disposés dans la direction périphérique les uns derrière les autres, de sorte que les éléments de blocs profilés soient réalisés avec des arêtes transversales obliques, limitant les éléments de blocs profilés dans la direction périphérique, les gorges transversales s'étendant sur les deux rangées de blocs profilés, partant de l'épaulement du pneu, axialement vers l'intérieur avec une inclinaison croissante, les gorges transversales étant réalisées de manière décalées les unes par rapport aux autres au niveau du passage par la gorge périphérique dans la direction périphérique, de telle sorte que l'extrémité de la gorge transversale tournée vers la gorge périphérique dans la rangée de blocs d'épaulement prenne la même position périphérique que l'extrémité de la gorge transversale tournée vers la gorge périphérique dans la rangée de blocs profilés supplémentaire.

9. Profil de bande de roulement asymétrique d'un pneu d'hiver selon les caractéristiques d'une ou plusieurs des revendications précédentes,
**caractérisé en ce que** le nombre de pas dans la région axiale (I) qui s'étend depuis cette première gorge périphérique (7) jusqu'à l'épaulement tourné vers le côté intérieur du véhicule dans l'état de fonctionnement du pneu sur le véhicule, est plus grand que dans la région axiale (A) qui s'étend depuis cette première gorge périphérique (7) jusqu'à l'épaulement tourné vers le côté extérieur du véhicule dans l'état de fonctionnement du pneu sur le véhicule,
- au moins les éléments de blocs profilés des rangées de blocs profilés dans la région axiale qui s'étend depuis cette première gorge périphérique jusqu'à l'épaulement tourné vers le côté intérieur du véhicule dans l'état de fonctionnement du pneu sur le véhicule étant réalisés avec des lamelles espacées les unes des autres qui s'étendent sur l'élément de blocs profilés,
- dans le profilé de bande de roulement, au moins deux rangées de blocs profilés (3, 4, 5) étant réalisées à partir d'éléments de blocs profilés (33, 34, 35) disposés les uns derrière les autres dans la direction périphérique et espacés les uns des autres par des gorges transversales (11, 12, 13) s'étendant obliquement, de sorte que les éléments de blocs profilés (33, 34, 35) soient réalisés avec des arêtes transversales s'étendant obliquement, limitant dans la direction périphérique les éléments de blocs profilés (33, 34, 35), et
- les éléments de blocs profilés (33, 34, 35) de ces rangées de blocs profilés (3, 4, 5) étant réalisés dans la direction axiale avec des arêtes longitudinales limitant latéralement les éléments de blocs profilés (33, 34, 35).

10. Profil de bande de roulement asymétrique d'un pneu d'hiver selon les caractéristiques d'une ou plusieurs des revendications précédentes,
- dans lequel une gorge périphérique ou une rainure périphérique est réalisée à chaque fois entre les rangées de blocs profilés,
- les éléments de blocs profilés à la fois d'au moins une rangée de blocs profilés et de l'autre ou des autres rangées de blocs profilés étant réalisés à chaque fois avec plusieurs lamelles transversales espacées les unes des autres avec une allure sinusoïdale dans la direction longitudinale des lamelles, l'allure des lamelles de long de leur étendue en profondeur étant réalisée avec un décalage de phase en continu dans la direction longitudinale des lamelles, de sorte que le décalage des lamelles le long de l'étendue en profondeur s'effectue le long d'une ligne d'inclinaison suivant un angle d'inclinaison alpha par rapport à la radiale, des lamelles voisines de l'élément de bloc profilé présentant à cet effet une inclinaison opposée à cette inclinaison le long d'une ligne d'inclinaison avec un angle d'inclinaison bêta par rapport à la radiale du décalage de phase, de sorte que les deux lignes d'inclinaison réalisées avec des inclinaisons opposées forment entre elles un angle gamma = alpha + bêta, qui est une mesure de l'entrecroisement des lamelles des éléments de blocs profilés,
- l'angle d'entrecroisement gamma des éléments de blocs profilés de la rangée de blocs d'épaulement étant notamment compris entre 35 et 60° et l'angle d'entrecroisement gamma de la ou des autres rangées de blocs profilés étant compris entre 15 et 25°.
